# EUROPÄISCHE PATENTANMELDUNG

(11) **EP 3 934 047 A1**
(43) Veröffentlichungstag der Anmeldung: **05.01.2022**
(21) Anmeldenummer: 20183211.0
(22) Anmeldetag: 30.06.2020
(51) Int. Cl.: H02J 3/01, H02J 3/26, H02M 1/12, H02M 5/458

(54) **FILTERVORRICHTUNG UND VERFAHREN ZUM BETRIEB DER FILTERVORRICHTUNG**

(71) Anmelder: Siemens Aktiengesellschaft, 80333 München (DE)
(72) Erfinder: Lange, Robert, 08451 Crimmitschau (DE); Seja, Marco, verstorben (DE)

(57) **Zusammenfassung**

Die Erfindung betrifft eine Filtervorrichtung (1) zur Verwendung für Umrichter (30) an einem Wechselspannungsnetz (20), aufweisend eine erste Kondensatoreinheit (2) mit einem ersten Kondensatorsternpunkt (3) und eine zweite Kondensatoreinheit (4) mit einem zweiten Kondensatorsternpunkt (5), wobei die Kondensatoreinheiten (2,4) jeweils mit einer ersten Wechselspannungsleitung (21) verbunden sind, aufweisend eine Drosseleinheit (6), wobei die Drosseleinheit (6) zwischen der ersten und zweiten Kondensatoreinheit (2,4) in der ersten Wechselspannungsleitung (21) verschaltet ist, und aufweisend Mittel zur Sättigungsminderung (37) der Drosseleinheit (6). Die Erfindung betrifft ebenfalls ein Verfahren (34) zum Betrieb der Filtervorrichtung (1) und einen Umrichter (30) mit der Filtervorrichtung (1).

## Beschreibung

Die Erfindung betrifft eine Filtervorrichtung zur Verwendung für einen Umrichter an einem Wechselspannungsnetz, aufweisend eine erste und zweite Kondensatoreinheit und eine Drosseleinheit. Die Erfindung betrifft ebenfalls ein Verfahren zum Betrieb der Filtervorrichtung und einen Umrichter mit der Filtervorrichtung.

Elektrische Geräte der Antriebs- und Automatisierungstechnik, aber auch der Energieversorgung, können im Betrieb beispielsweise leitungsgebundene und/oder feldgebundene elektrische Störungen erzeugen. Zur Verringerung derartiger Störaussendung kommen für die Verringerung bzw. Vermeidung von Gleichtaktströmen meist Gleichtaktdrosseln in Verbindungen mit Kondensatoreinheiten für entsprechende Filter zum Einsatz.

Als Gleichtaktströme werden Ströme in den einzelnen Phasen einer elektrischen Leitung bezeichnet, welche, im Gegensatz zu Gegentaktströmen, jeweils das gleiche Vorzeichen bzgl. ihrer Stromrichtung aufweisen.

Die Gegentaktströme hingegen addieren sich bzgl. ihrer Stromrichtung, insbesondere im störungsfreien Fall, in der Summe ihrer Ströme zu Null, d.h. dass der insgesamt in den Phasen einer elektrischen Leitung zu einem Verbraucher hinfließende Strombetrag gleich dem in den Phasen vom Verbraucher zurückfließenden Strombetrag ist. Dies gilt insbesondere auch beim Einsatz eines Nullleiters. Die daraus resultierenden Störgrößen werden auch symmetrische Störungen oder Gegentaktstörungen genannt.

Da Gleichtaktströme zum Verbraucher hin die gleiche Stromrichtung aufweisen, nimmt deren Rückstrom über elektrostatische Kapazitäten, insbesondere über Leitungskapazitäten, seinen Weg über geerdete Bauelemente der elektrischen Geräte bzw. über die Umgebungserde hin zum Energieerzeuger.

Aus den Gleichtaktströmen resultierende Störgrößen werden auch als asymmetrische Störungen oder Gleichtaktstörungen bezeichnet.

Verursacht werden Gleichtaktstörungen beispielsweise durch Funkenstörungen bei Bürstenmotoren, durch Schaltnetzteile, und Frequenzumrichter für elektrische Maschinen, wobei auch signifikante elektrische Verluste bzw. Belastungen bei elektrischen Geräten, bei mit ihnen verbundenen elektrischen Leitungen und letztendlich bei Energieverteilungssystem (Netze, Transformatoren) und Energieerzeuger (Generatoren) auftreten können.

Für einen Gleichtaktfilter werden häufig stromkompensierte Drosseln mit Drosselkern als Gleichtaktdrossel verwendet, wobei beispielsweise die jeweils pro Phase um den gemeinsamen Drosselkern gewickelten Windungen die gleiche Windungszahl aufweisen.

Ferner weist der Gleichtaktfilter als Kondensatoreinheit sogenannte in Y-Konfiguration von verschalteten Kondensatoren (Y-Kondensatoreinheit) auf, welche mittels eines Schutzleiters (PE) mit einem Erdpotential verbunden sind.

Dieser Gleichtaktfilter mit einer meist sehr niederohmigen Verbindung der Y-Kondensatoreinheit über den Schutzleiter mit dem Erdpotential eignet sich besonders für die Ableitung des Gleichtaktstroms (der Störgröße) beim Betrieb von elektrischen Geräten, z.B. Umrichtern, an einem TT-Netz (TT franz.: Terre Terre) oder TN-Netz (TN franz.: Terre Neutre) mit einem auf Erdpotential geerdeten Netzsternpunkt an der Erzeugerseite des Netzes.

Diese Netze weisen zumindest eine der folgenden Auslegungen bzw. Anschaltungen des auf Erdpotential geerdeten Netzsternpunkt auf, wonach der Schutzleiter der elektrischen Leitung allein, der Schutzleiter mittels einer zumindest teilweisen Kombination von Nullleiter (N) und Schutzleiter oder der Nullleiter der elektrischen Leitung allein mit dem geerdeten Netzsternpunkt an der Erzeugerseite des entsprechenden Netzes (der Stromquelle) verbunden ist.

Die über den Schutzleiter mit dem Erdpotential verbundene Y-Kondensatoreinheit eines Gleichtaktfilters mit Gleichtaktdrossel für elektrische Geräte, wie z.B. Umrichtern, kann jedoch nicht an einem insbesondere auf elektrische Störungen überwachten IT-Netz (IT franz.: Isole Terre) betrieben werden, welches bzgl. seiner Phasen insbesondere an der Erzeugerseite (der Stromquelle) erdungsfrei, also gegenüber dem Erdpotential isoliert, ausgelegt sind. Hier sind im störungsfreien Betrieb keine oder nur sehr geringe Ableitströme insbesondere über die Y-Kondensatoreinheit und den Schutzleiter an das Erdpotential zulässig.

Kommt ein Betrieb von elektrischen Geräten, wie z.B. Umrichtern, an einem TT-Netz oder einem TN-Netz zum Einsatz, bei denen im Gegensatz zu einem geerdeten Netzsternpunkt ein Au-βenleiter also eine Phase des TT- oder TN-Netzes an der Erzeugerseite (der Stromquelle) mit dem geerdeten Erdpotential verbunden ist, können auch hier für spezifische Betriebszustände keine oder nur sehr geringe Ableitströme insbesondere über die Y-Kondensatoreinheit und den Schutzleiter an das Erdpotential zulässig sein.

Auch kann es notwendig werden, bei einem Einsatz von z.B. Fehlerstrom-Schutzschaltern betriebsbedingt auftretende Ableitströme weiter zu verringern oder auszuschließen.

Bisher ist es daher vorsorglich meist üblich, solche elektrischen Geräte mittels eines vorgeschalteten Trenntransformator an erdungsfreien IT-Netzen oder TN- und TT-Netzen mit geerdetem Außenleiter zu betreiben, wobei der Trenntransformator sekundärseitig einen geerdeten Netzsternpunkt aufweisen muss und sehr kostenintensiv und bauraumverbrauchend ist.

Ferner besteht die Möglichkeit, die Y-Kondensatoreinheit an dem entsprechenden elektrischen Gerät zu entfernen oder die Verbindung zu dem geerdeten Schutzleiter und damit dem Erdpotential aufzutrennen. Dies ist jedoch im Allgemeinen nur möglich, wenn keine stromkompensierte Drossel im Filter am elektrischen Gerät eingesetzt wird.

Das Auftrennen der Y-Kondensatoreinheit von dem geerdeten Schutzleiter führt zwar einerseits zur Verhinderung oder zumindest zur Verringerung der Ableitströme bzw. auch zu einer Verringerung der Spannungsbelastung der Kondensatoren der Y-Kondensatoreinheit, jedoch kann andererseits die stromkompensierte Drossel periodisch in Sättigung getrieben werden, da der Ableitpfad für die Gleichtaktströme der Gleichtaktstörungen durch die Auftrennung die Y-Kondensatoreinheit an dieser Stelle unwirksam ist. Dies kann zu einer übermäßigen Erwärmung des Drosselkerns der stromkompensierten Drossel führen und eine Zerstörung der Gleichtaktdrossel hervorrufen.

Auch ist es natürlich möglich, die stromkompensierte Drossel derart überdimensioniert auszulegen, dass sie für alle denkbaren Einsatzfälle bei einer Auftrennung der Verbindung zwischen Y- Kondensatoreinheit und dem geerdetem Schutzleiter gerüstet ist, wobei dieses Vorgehen in ineffizienter Weise zu hohen Kosten und einem hohen Bauraumverbrauch führt.

Der Erfindung liegt daher die Aufgabe zugrunde, eine effiziente Filtervorrichtung mit einer Drosseleinheit als Gleichtaktdrossel und ein Verfahren für die Filtervorrichtung vorzuschlagen, welche einerseits für einen Einsatz in einem Netz mit geerdetem Netzsternpunkt und andererseits für einen Einsatz in einem Netz mit geerdetem Außenleiter oder einem erdungsfreien Netz geeignet sind, ohne die Gleichtaktdrossel unzulässig zu erwärmen.

Die Aufgabe wird durch eine Filtervorrichtung mit den in Anspruch 1 angegebenen Merkmalen, durch einen Umrichter mit der Filtervorrichtung nach den in Anspruch 12 angegebenen Merkmalen und durch ein Verfahren zum Betrieb der Filtervorrichtung nach den in Anspruch 14 angegebenen Merkmalen gelöst.

Für die Lösung der Aufgabe wird eine Filtervorrichtung zur Verwendung für Umrichter an einem Wechselspannungsnetz vorgeschlagen, welche eine erste Kondensatoreinheit mit einem ersten Kondensatorsternpunkt und eine zweite Kondensatoreinheit mit einem zweiten Kondensatorsternpunkt aufweist, wobei die Kondensatoreinheiten jeweils mit einer ersten Wechselspannungsleitung verbunden sind, welche eine Drosseleinheit aufweist, wobei die Drosseleinheit zwischen der ersten und zweiten Kondensatoreinheit in der ersten Wechselspannungsleitung verschaltet ist, und welche Mittel zur Sättigungsminderung der Drosseleinheit aufweist.

Das Mittel zur Sättigungsminderung der Drosseleinheit verhindert in vorteilhafter Weise, dass die Drosseleinheit als Gleichtaktdrossel unzulässig erwärmt wird. Somit ist ein Einsatz der Filtervorrichtung mit der Drosseleinheit gemeinsam mit den Kondensatoreinheiten für den Betrieb des Umrichters an Netzen mit unterschiedlichen Erdungskonzepten möglich.

Der Anwender der Filtervorrichtung benötigt nur eine geringfügige Einstellung der Filtervorrichtung für einen jeweiligen Betriebsfall, welcher von den Netzeigenschaften und der Netztopologie, an dem die Filtervorrichtung betrieben werden soll, abhängig ist. So kann die Einstellung am z.B. Umrichter oder auch an der vom Umrichter getrennt betreibbaren Filtervorrichtung vorgenommen werden.

Bei einem Einsatz der Filtervorrichtung beispielsweise im Umrichter ist ein kompakter Aufbau einer Antriebseinheit möglich. Wird die Filtervorrichtung extern, also außerhalb eines elektrischen Gerätes wie den Umrichter betrieben, kann die Filtervorrichtung flexibel innerhalb des zu betreibenden Netzes angeordnet werden.

Vorteilhafte Ausgestaltungsformen der Filtervorrichtung sind in den abhängigen Ansprüchen angegeben.

Bei einer ersten vorteilhaften Ausgestaltungsform der Filtervorrichtung ist die Filtervorrichtung für einen ersten Betrieb des Umrichters an einem als Wechselspannungsnetz ausgebildeten Netz mit geerdetem Außenleiter oder an einem als Wechselspannungsnetz ausgebildeten erdungsfreien Netz hergerichtet, wobei das Mittel zu Sättigungsminderung aktivierbar und die erste Kondensatoreinheit von einem geerdeten Schutzleiter trennbar ist.

Unter dem Wechselspannungsnetz als Netz mit geerdetem Außenleiter werden in vorteilhafter Weise insbesondere TT-Netze oder TN-Netze verstanden, bei denen nur einer der Außenleiter an der Erzeugerseite des jeweiligen Netzes mit dem Erdpotential verbunden ist und unter dem als Wechselspannungsnetz ausgebildeten erdungsfreien Netz wird in vorteilhafter Weise insbesondere ein IT-Netz verstanden, bei dem die elektrischen Phasen an der Erzeugerseite des Netzes gegenüber dem Erdpotential elektrisch isoliert sind.

Zum Betrieb der Filtervorrichtung an den Netzen mit geerdetem Außenleiter oder an dem erdungsfreien Netz kann vorteilhaft auf einen Trenntransformator verzichtet werden.

In diesem ersten Betrieb ist es somit vorteilhaft, das Mittel zur Sättigungsminderung aktivieren zu können, um die unzulässige Erwärmung der als Gleichtaktdrossel betreibbaren Drosseleinheit für möglichst jeden ihrer elektrischen Zustände im ersten Betrieb durch die Sättigungsminderung verhindern zu können. Die Kondensatoreinheit kann in diesem ersten Betrieb von dem geerdeten Schutzleiter getrennt werden, was die Verhinderung der unzulässigen Erwärmung der Gleichtaktdrossel bevorzugt unterstützt.

Bei einer weiteren vorteilhaften Ausgestaltungsform der Filtervorrichtung ist die Filtervorrichtung für einen zweiten Betrieb des Umrichters an einem als Wechselspannungsnetz ausgebildeten Netz mit geerdetem Netzsternpunkt hergerichtet, wobei die erste Kondensatoreinheit mit dem geerdeten Schutzleiter zur Stromableitung eines Stroms verbindbar und das Mittel zu Sättigungsminderung deaktivierbar ist.

Unter dem Wechselspannungsnetz als Netz mit geerdetem Netzsternpunkt werden in vorteilhafter Weise insbesondere TT-Netze oder TN-Netze verstanden, bei denen der an der Erzeugerseite des jeweiligen Netzes gebildete Netzsternpunkt mit dem Erdpotential verbunden ist.

In diesem zweiten Betrieb ist es somit vorteilhaft, die Kondensatoreinheit mit dem geerdeten Schutzleiter verbinden zu können, um den als Gleichtaktstrom erzeugbaren Strom ableiten zu können. Das Mittel zur Sättigungsminderung kann im zweiten Betrieb bevorzugt deaktiviert werden, was die Stromableitung des Gleichtaktstroms effizient unterstützen kann.

Bei einer weiteren vorteilhaften Ausgestaltungsform der Filtervorrichtung umfasst das Mittel zur Sättigungsminderung die erste und zweite Kondensatoreinheit und eine erste Kontakteinheit und ist die erste Kontakteinheit zum Öffnen und Schließen einer ersten elektrischen Verbindung zwischen dem ersten Kondensatorsternpunkt der ersten Kondensatoreinheit und dem zweiten Kondensatorsternpunkt der zweiten Kondensatoreinheit zur Aktivierung und Deaktivierung der Sättigungsminderung ausgebildet.

Mit dem Schließen der ersten elektrischen Verbindung zwischen dem ersten Kondensatorsternpunkt der ersten Kondensatoreinheit und dem zweiten Kondensatorsternpunkt der zweiten Kondensatoreinheit und der damit verbundenen Aktivierung der Sättigungsminderung wird eine elektrische Überbrückung der Drosseleinheit, also der Gleichtaktdrossel erreicht, und zumindest ein Teil des Stroms, also des Gleichtaktstroms wird über die Kondensatoreinheiten von der Drosseleinheit abgeleitet bzw. herausgefiltert.

Dies eignet sich vorteilhaft für den Einsatz der Filtervorrichtung an dem als Wechselspannungsnetz ausgebildeten Netz mit geerdetem Außenleiter oder an dem als Wechselspannungsnetz ausgebildeten erdungsfreien Netz.

Der Einsatz der zweiten Kondensatoreinheit verbessert grundsätzlich Filtereigenschaften der Filtervorrichtung. Die zweite Kondensatoreinheit ist aber auch ein sehr vorteilhafter Bestandteil für das Mittel zur Sättigungsminderung.

Bei einer weiteren vorteilhaften Ausgestaltungsform der Filtervorrichtung ist eine zweite Kontakteinheit zum Öffnen und Schließen einer zweiten elektrischen Verbindung zwischen dem ersten Kondensatorsternpunkt der zweiten Kondensatoreinheit und dem geerdeten Schutzleiter zur Aktivierung und Deaktivierung der Stromableitung des Stroms ausgebildet.

Der im zweiten Betrieb als Strom erzeugbare Gleichtaktstrom kann so vorteilhaft von der Kondensatoreinheit über die zweite Kontakteinheit zum geerdeten Schutzleiter abgeleitet werden.

Bei einer weiteren vorteilhaften Ausgestaltungsform der Filtervorrichtung umfasst die erste Kondensatoreinheit einen ersten, zweiten und dritten Kondensator, ist der erste Kondensator einerseits mit einer ersten Wechselspannungsphase der ersten Wechselspannungsleitung, ist der zweite Kondensator einerseits mit der zweiten Wechselspannungsphase der ersten Wechselspannungsleitung und ist der dritte Kondensator einerseits mit der dritten Wechselspannungsphase der ersten Wechselspannungsleitung verbunden und bildet der erste, zweite und dritte Kondensator andererseits den ersten Kondensatorsternpunkt aus.

Bei einer weiteren vorteilhaften Ausgestaltungsform der Filtervorrichtung umfasst die zweite Kondensatoreinheit einen vierten, fünften und sechsten Kondensator, ist der vierte Kondensator einerseits mit der ersten Wechselspannungsphase der ersten Wechselspannungsleitung, ist der fünfte Kondensator einerseits mit der zweiten Wechselspannungsphase der ersten Wechselspannungsleitung und ist der sechste Kondensator einerseits mit der dritten Wechselspannungsphase der ersten Wechselspannungsleitung verbunden und bilden die Kondensatoren andererseits den zweiten Kondensatorsternpunkt aus.

In einer bevorzugten Ausprägung der Filtervorrichtung umfasst die Drosseleinheit eine erste Spule in der ersten Wechselspannungsphase, eine zweite Spule in der zweiten Wechselspannungsphase und eine dritte Spule in einer dritten Wechselspannungsphase der ersten Wechselspannungsleitung, wobei die Drosseleinheit einen gemeinsamen Drosselkern an der ersten, zweiten und dritten Spule ausgebildet.

Bei einer weiteren vorteilhaften Ausgestaltungsform der Filtervorrichtung weist mindestens eine der elektrischen Kontakteinheiten einen elektromechanischen Verbinder oder einen Halbleiterschalter auf.

In einer einfachen Form kann der elektromechanische Verbinder zum Beispiel in vorteilhafter Weise als eine Schraubverbindungen aber auch als elektrischer Schalter ausgebildet sein.

Bei einer weiteren vorteilhaften Ausgestaltungsform der Filtervorrichtung ist mindestens eine der elektrischen Kontakteinheiten als ansteuerbarer Schalter ausgebildet und mittels eines Ansteuersignals einer Steuereinheit ansteuerbar.

Ein ansteuerbarer Schalter kann beispielsweise als IGBT oder MOSFET aber auch als Relais oder Schütz ausgebildet sein. Die Steuereinheit kann von der Filtervorrichtung aber beispielsweise auch von einer Steuereinheit des Umrichters umfasst sein.

Sie kann ebenfalls als Steuereinheit ausgebildet sein, welche beispielsweise von einer überlagerten Antriebs-, Automatisierung- oder Energiesteuerung umfasst wird. Sollte sich die Netztopologie ändern, kann auf effiziente und vorteilhaft Weise eine Umschaltung der Filtervorrichtung erfolgen, so dass die Filtervorrichtung für den ersten Betrieb oder den zweiten Betrieb des Umrichters einsetzbar ist.

Bei einer weiteren vorteilhaften Ausgestaltungsform der Filtervorrichtung sind die elektrischen Kontakteinheiten als ein elektrischer Wechsler ausgebildet.

Mittels des elektrischen Wechslers, auch bekannt als Wechselschalter, erfolgt das gleichzeitige Umschalten der ersten und der zweiten Kontakteinheit und somit eine gleichzeitige Umschaltung der Kontakteinheiten. Beispielweise ist in einem ersten Schaltzustand des Wechslers die erste Kontakteinheit geschlossen und die zweite Kontakteinheit geöffnet. Nach Aktivierung des Wechslers ist danach in einem zweiten Schaltzustand des Wechslers die erste Kontakteinheit geöffnet und die zweite Kontakteinheit geschlossen. Dieser Schaltvorgang des gleichzeitigen Umschaltens der beiden Kontakteinheiten durch den elektrischen Wechsler ist reversibel durchführbar.

Bei einer weiteren vorteilhaften Ausgestaltungsform der Filtervorrichtung ist ein passives elektrisches Bauelement, insbesondere eine weitere Drossel, in der ersten elektrischen Verbindung zwischen dem ersten elektrischen Kondensatorsternpunkt und dem zweiten elektrischen Kondensatorsternpunkt elektrisch verschaltet.

Die filternde Wirkung für die Herausfilterung des Gleichtaktstrom von der Drosseleinheit, also der Gleichtaktdrossel, wird insbesondere durch die weitere Drossel in der ersten elektrischen Verbindung vorteilhaft verstärkt, so dass u.a. die thermische Entlastung des gemeinsamen Drosselkerns der Drosseleinheit erhöht wird.

Für die Lösung der Aufgabe wird weiterhin ein Umrichter mit der erfindungsgemäßen Filtervorrichtung zum Betrieb einer elektrischen Maschine an dem Wechselspannungsnetz vorgeschlagen.

Bei einer ersten vorteilhaften Ausgestaltungsform des Umrichters ist die Filtervorrichtung in ein Umrichtergehäuse des Umrichters integriert.

Die Integration der Filtervorrichtung in das Umrichtergehäuse des Umrichters hat beispielsweise den Vorteil, dass der Umrichter in kompakter Bauweise stets die Filtervorrichtung für die Anschaltung an die verschiedenen Netztopologien für den ersten und den zweiten Betrieb des Umrichters aufweist und ein Kunde sich mittels Einstellung am Umrichter für den jeweiligen Betrieb entscheiden kann.

Für die Lösung der Aufgabe wird ebenfalls ein Verfahren zum Betrieb der erfindungsgemäßen Filtervorrichtung vorgeschlagen, wobei die Filtervorrichtung für den ersten Betrieb des Umrichters an dem als Wechselspannungsnetz ausgebildeten Netz mit geerdetem Außenleiter oder an dem als Wechselspannungsnetz ausgebildeten erdungsfreien Netz eingestellt wird oder die Filtervorrichtung für den zweiten Betrieb des Umrichters an dem als Wechselspannungsnetz ausgebildeten Netz mit geerdetem Netzsternpunkt eingestellt wird.

Bei einer vorteilhaften Ausgestaltungsform des Verfahrens wird im ersten Betrieb des Umrichters das Mittel zur Sättigungsminderung der Drosseleinheit aktiviert und wird die erste Kondensatoreinheit von dem geerdeten Schutzleiter getrennt oder wird im zweiten Betrieb des Umrichters die erste Kondensatoreinheit mit dem geerdeten Schutzleiter zur Stromableitung verbunden und das Mittel zu Sättigungsminderung deaktiviert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung einer bekannten Filtervorrichtung,
- FIG 2: eine erste schematische Darstellung der erfindungsgemäßen Filtervorrichtung,
- FIG 3: eine zweite schematische Darstellung der erfindungsgemäßen Filtervorrichtung nach FIG 2,
- FIG 4: eine dritte schematische Darstellung der erfindungsgemäßen Filtervorrichtung in einem Ausschnitt nach FIG 2 und
- FIG 5: ein schematisches Struktogramm eines Verfahrens für die erfindungsgemäße Filtervorrichtung.

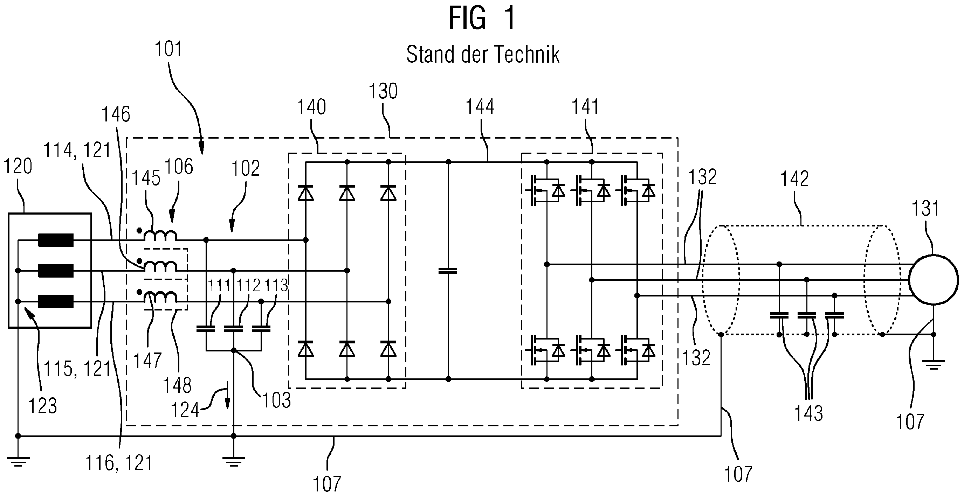

Die FIG 1 zeigt in einer schematischen Darstellung eine bekannte Filtervorrichtung 101, welche an einer ersten Wechselspanungsleitung 121 elektrisch angeordnet und über die erste Wechselspanungsleitung 121 mit einem Gleichrichter 140 eines Umrichters 130 elektrisch verbunden ist.

Der Umrichter 130 weist ferner einen Wechselrichter 141 auf, welcher mittels eines Gleichspannungszwischenkreises 144 elektrisch mit dem Gleichrichter 140 gekoppelt ist.

Der Umrichter 130 ist ausgangsseitig über den Wechselrichter 141 und eine zweite Wechselspannungsleitung 132 mit einer elektrischen Maschine 131 gekoppelt, wobei die elektrische Maschine 131 über einen geerdeten Schutzleiter 107 mit dem Erdpotential verbunden ist.

Die zweite Wechselspannungsleitung 132 weist einen Leitungsschirm 142 auf, welcher mit dem geerdeten Schutzleiter 107 und somit dem Erdpotential verbunden ist. Im Betrieb des Umrichters 130 bilden sich Leitungskapazitäten 143 ausgehend von den einzelnen Phasen der zweiten Wechselspannungsleitung 132 gegenüber dem Leitungsschirm 142 aus.

Die Filtervorrichtung 101 weist eine Drosseleinheit 106 in Form einer Gleichtaktdrossel (stromkompensierter Drossel) und eine Kondensatoreinheit 102 an der ersten Wechselspannungsleitung 121 auf.

Die Drosseleinheit 106 umfasst eine erste Spule 145 in einer ersten Wechselspannungsphase 114, eine zweite Spule 146 in einer zweiten Wechselspannungsphase 115 und eine dritte Spule 147 in einer dritten Wechselspannungsphase 116 der ersten Wechselspannungsleitung 121. Ferner bildet die Drosseleinheit 106 einen gemeinsamen Drosselkern 148 an der ersten, zweiten und dritten Spule 145,146,147 aus.

Die Kondensatoreinheit 102 umfasst einen ersten, zweiten und dritten Kondensator 111,112,113. Der erste Kondensator 111 ist einerseits mit der ersten Wechselspannungsphase 114 der ersten Wechselspannungsleitung 121, der zweite Kondensator 112 ist einerseits mit der zweiten Wechselspannungsphase 115 der ersten Wechselspannungsleitung 121 und der dritte Kondensator 113 ist einerseits mit der dritten Wechselspannungsphase 116 der ersten Wechselspannungsleitung 121 verbunden und die Kondensatoren 111,112,113 bilden andererseits einen Kondensatorsternpunkt 103 aus.

Die Kondensatoren 111,112,113 der Kondensatoreinheit 102 sind über den Kondensatorsternpunkt 103 mit dem geerdeten Schutzleiter 107 verbunden. So kann ein Strom 124 in Form eines Gleichtaktstroms gegenüber dem Erdpotential abgeleitet werden.

Es ist möglich, dass ein weiterer Kondensator in der Verbindung zwischen dem Kondensatorsternpunkt 103 und dem geerdeten Schutzleiter 107 verschaltet werden kann (in FIG 1 nicht gezeigt).

Die Umrichter 140 mit der Filtervorrichtung 101 ist eingangsseitig mittels der ersten Wechselspannungsleitung 121 mit einem Wechselspannungsnetz 120 verbunden. Das Wechselspannungsnetz 120 ist als Netz mit dem geerdeten Sternpunkt 123, hier als TN-Netz mit geerdetem Sternpunkt 123, ausgebildet. Das Erdpotential für den geerdeten Sternpunkt 123 ist mit dem geerdeten Schutzleiter 107 verbunden.

Eine Ableitung des Strom 124 als Gleichtaktstrom ist, wie in FIG 1 gezeigt, im Allgemeinen nur dann möglich, wenn der Umrichter 140 an dem Netz mit geerdetem Netzsternpunkt 123 bzw. mit einem zusätzlichen Trenntransformator (in FIG 1 nicht gezeigt) betrieben wird.

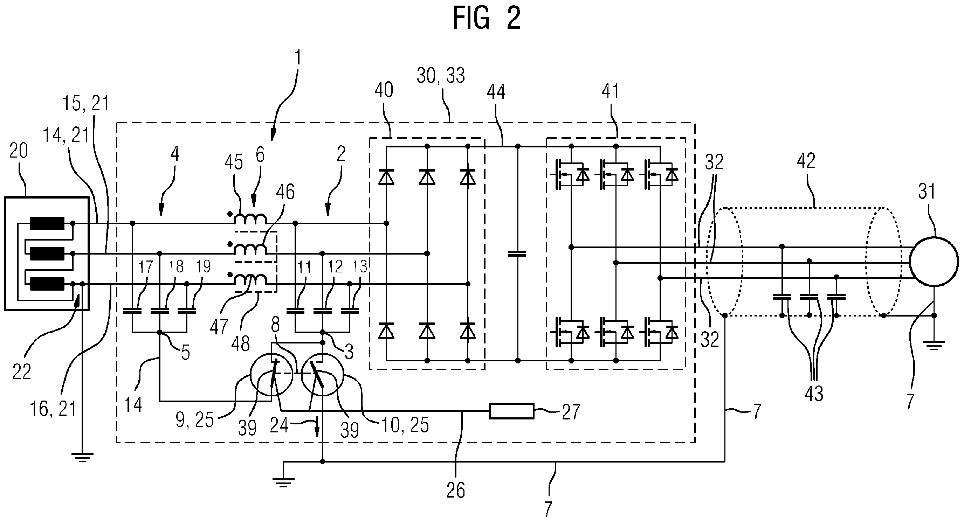

Die FIG 2 zeigt in einer ersten schematischen Darstellung die erfindungsgemäße Filtervorrichtung 1, welche an einer ersten Wechselspanungsleitung 21 elektrisch angeordnet und über die erste Wechselspanungsleitung 21 mit einem Gleichrichter 40 eines Umrichters 30 verbunden ist.

Der Umrichter 30 weist ferner einen Wechselrichter 41 auf, welcher mittels eines Gleichspannungszwischenkreises 44 mit dem Gleichrichter 40 gekoppelt ist.

Der Umrichter 30 ist ausgangsseitig über den Wechselrichter 41 und eine zweite Wechselspannungsleitung 32 mit einer elektrischen Maschine 31 gekoppelt, wobei die elektrische Maschine 31 über einen geerdeten Schutzleiter 7 mit dem Erdpotential verbunden ist.

Die zweite Wechselspannungsleitung 32 weist einen Leitungsschirm 42 auf, welcher mit dem geerdeten Schutzleiter 7 und somit dem Erdpotential verbunden ist. Im Betrieb des Umrichters 30 bilden sich Leitungskapazitäten 43 ausgehend von den einzelnen Phasen der zweiten Wechselspannungsleitung 32 gegenüber dem Leitungsschirm 42 aus.

Die Filtervorrichtung 1 weist eine Drosseleinheit 6 in Form einer Gleichtaktdrossel (stromkompensierter Drossel) eine erste Kondensatoreinheit 2 und eine zweite Kondensatoreinheit 4 an der ersten Wechselspannungsleitung 21 auf. Die Drosseleinheit 6 ist zwischen der ersten und der zweiten Kondensatoreinheit 2,4 in der ersten Wechselspanungsleitung 21 verschaltet.

Die Drosseleinheit 6 umfasst eine erste Spule 45 in einer ersten Wechselspannungsphase 14, eine zweite Spule 46 in einer zweiten Wechselspannungsphase 15 und eine dritte Spule 47 in einer dritten Wechselspannungsphase 16 der ersten Wechselspannungsleitung 21. An der ersten, zweiten und dritten Spule 45,46,47 bildet die Drosseleinheit 6 einen gemeinsamen Drosselkern 48 aus.

Die erste Kondensatoreinheit 2 umfasst einen ersten, zweiten und dritten Kondensator 11,12,13. Der erste Kondensator 11 ist einerseits mit der ersten Wechselspannungsphase 14 der ersten Wechselspannungsleitung 21, der zweite Kondensator 12 ist einerseits mit der zweiten Wechselspannungsphase 15 der ersten Wechselspannungsleitung 21 und der dritte Kondensator 13 ist einerseits mit der dritten Wechselspannungsphase 16 der ersten Wechselspannungsleitung 21 verbunden und die ersten, zweiten und dritten Kondensatoren 11,12,13 bilden andererseits einen ersten Kondensatorsternpunkt 3 aus.

Die zweite Kondensatoreinheit 4 umfasst einen vierten, fünften und sechsten Kondensator 17,18,19. Der vierte Kondensator 17 ist einerseits mit der ersten Wechselspannungsphase 14 der ersten Wechselspannungsleitung 21, der fünfte Kondensator 18 ist einerseits mit der zweiten Wechselspannungsphase 15 der ersten Wechselspannungsleitung 21 und der sechste Kondensator 19 ist einerseits mit der dritten Wechselspannungsphase 16 der ersten Wechselspannungsleitung 21 verbunden und die vierten, fünften und sechsten Kondensatoren 17,18,19 bilden andererseits einen zweiten Kondensatorsternpunkt 5 aus.

Die ersten, zweiten und dritten Kondensatoren 11,12,13 der ersten Kondensatoreinheit 2 sind über den ersten Kondensatorsternpunkt 3 und eine erste Kontakteinheit 9 in einer ersten elektrischen Verbindung mit dem zweiten Kondensatorsternpunkt 5 der vierten, fünften und sechsten Kondensatoren 17,18,19 der zweiten Kondensatoreinheit 4 verbunden.

Mittels einer zweiten Kontakteinheit 10 sind die ersten, zweiten und dritten Kondensatoren 11,12,13 der ersten Kondensatoreinheit 2 in einer zweiten elektrischen Verbindung mit dem geerdeten Schutzleiter 7 verbunden.

Es ist möglich, dass ein weiterer Kondensator in der zweiten elektrischen Verbindung zwischen dem ersten Kondensatorsternpunkt 3 und dem geerdeten Schutzleiter 7 in Reihe zu der zweiten Kontakteinheit 10 verschaltet werden kann (in FIG 2 nicht gezeigt).

Der als ansteuerbarer Schalter 39 ausgelegte elektromechanische Verbinder 25 der ersten Kontakteinheit 9 ist geschlossen, während der als ansteuerbarer Schalter 39 ausgelegte elektromechanische Verbinder 25 der zweiten Kontakteinheit 10 geöffnet ist.

Ein Strom 24 in Form eines Gleichtaktstroms für einen zweiten Betrieb des Umrichters 30 wird in FIG 2 gegenüber dem Erdpotential nicht abgeleitet.

Der Gleichtaktstrom wird über die mittels der ersten Kontakteinheit 9 geschaffenen ersten elektrischen Verbindung zwischen den Kondensatorsternpunkten 3,5 der Kondensatoreinheiten 2,4 von der im Betrieb des Umrichters 30 als Gleichtaktdrossel arbeitenden Drosseleinheit 6 abgeleitet bzw. herausgefiltert. Der gemeinsame Drosselkern 48 der Drosseleinheit 6 wird von seiner magnetischen Aktivität begrenzt, so dass hauptsächlich die Spulen 45,46,47 der Drosseleinheit 6 weiter für die Filtervorrichtung 1 wirken.

Somit kann der gemeinsame Drosselkern 48 nicht in eine in der Regel periodische Sättigung getrieben und unzulässig erwärmt werden, obwohl der Strom 24 in Form des Gleichtaktstroms, erzeugt beispielsweise durch Umladevorgänge an den Leitungskapazitäten 43 des Leitungsschirms 42 der zweiten Wechselspannungsleitung 32, durch die Auftrennung der zweiten elektrischen Verbindung zwischen dem ersten Kondensatorsternpunkt 3 und dem geerdeten Schutzleiter 7 nicht mehr zum Schutzleiter 7 abgeleitet werden kann.

Die beiden Kontakteinheiten 9,10 mit jeweils einem ansteuerbaren Schalter 39 pro Kontakteinheit 9,10 können jeweils allein oder gemeinsam durch ein Ansteuersignal 26 von einer Steuereinheit 27 angesteuert werden. In FIG 2 sind beiden Kontakteinheiten 9,10 als ein elektrischer Wechsler 8 ausgebildet.

Der Umrichter 30 mit der Filtervorrichtung 1 ist eingangsseitig mittels der ersten Wechselspannungsleitung 21 mit einem Wechselspannungsnetz 20 verbunden. Das Wechselspannungsnetz 20 ist als Netz mit geerdetem Außenleiter 22, hier als TT-Netz mit geerdetem Außenleiter 22, ausgebildet. Das Erdpotential für den geerdetem Außenleiter 22 ist nicht mit dem geerdeten Schutzleiter 7 verbunden.

Demnach ist die in FIG 2 gezeigte schematische Darstellung der Filtervorrichtung 1 für einen ersten Betrieb des Umrichters 30 an dem als Wechselspannungsnetz 20 ausgebildeten Netz mit geerdetem Außenleiter 21 vorgesehen.

Ferner kann der Umrichter 30 mit der Filtervorrichtung 1 in dieser Verschaltung auch an einem als Wechselspannungsnetz 20 ausgebildeten erdungsfreien Netz, beispielsweise einem IT-Netz, betrieben werden. In diesem Fall ist das Wechselspannungsnetz 20 vom Erdpotential isoliert (in FIG 2 nicht dargestellt).

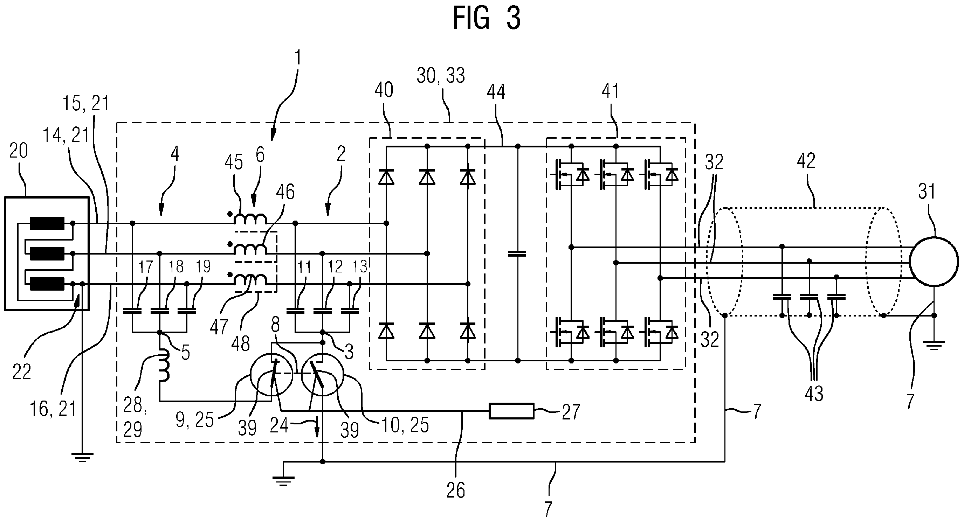

Mit FIG 3 wird eine zweite schematische Darstellung der erfindungsgemäßen Filtervorrichtung 1 aufgezeigt, welche im Wesentlichen der FIG 2 entspricht.

Im Unterschied zur FIG 2 ist bei der FIG 3 in der mittels der ersten Kontakteinheit 9 geschaffenen ersten elektrischen Verbindung zwischen den Kondensatorsternpunkten 3,5 der Kondensatoreinheiten 2,4 ein passives elektrisches Bauelement 28, hier eine weitere Drossel 29, verschaltet.

Die filternde Wirkung für die Herausfilterung des Gleichtaktstrom von der Drosseleinheit 6, also der Gleichtaktdrossel, wird insbesondere durch die weitere Drossel 29 in der ersten elektrischen Verbindung verstärkt, so dass u.a. die thermische Entlastung des gemeinsamen Drosselkerns 48 der Drosseleinheit erhöht wird.

Denkbar ist hier auch der Einsatz eines ohmschen Widerstandes, einer weiteren Kapazität oder einer Kombination aus weiterer Drossel, ohmschen Widerstand und weiterer Kapazität.

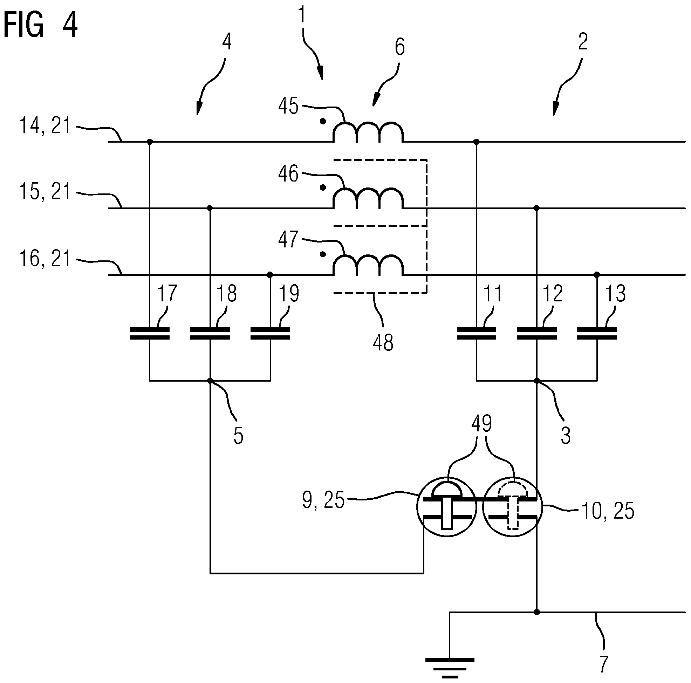

In FIG 4 wird eine dritte schematische Darstellung der erfindungsgemäßen Filtervorrichtung in einem Ausschnitt nach FIG 2 visualisiert.

Die FIG 4 unterscheidet sich als Ausschnitt von FIG 2 dadurch, dass die beiden Kontakteinheiten 9,10 jeweils als elektromechanischer Verbinder 25 in Form von Schraubverbindungen 49 ausgebildet sind. Die Schraubverbindung 49 der zweiten Kontakteinheit 10 ist gestrichelt dargestellt, was den elektromechanischen Verbinder 25 als geöffnet zeigen soll.

Alle weiteren Aussagen zur FIG 2, insbesondere welche den in FIG 4 gezeigten Ausschnitt der Filtervorrichtung 1 aus FIG 2 betreffen, gelten analog auch für die FIG 4.

Demnach ist die Filtervorrichtung 1 für einen ersten Betrieb des Umrichters an dem als Wechselspannungsnetz ausgebildeten Netz mit geerdetem Außenleiter geeignet (in FIG 4 nicht gezeigt).

Ferner kann der Umrichter mit der Filtervorrichtung 1 in dieser Verschaltung auch an einem als Wechselspannungsnetz ausgebildeten erdungsfreien Netz, beispielsweise einem IT-Netz, betrieben werden. In diesem Fall ist das Wechselspannungsnetz vom Erdpotential isoliert (in FIG 4 nicht dargestellt).

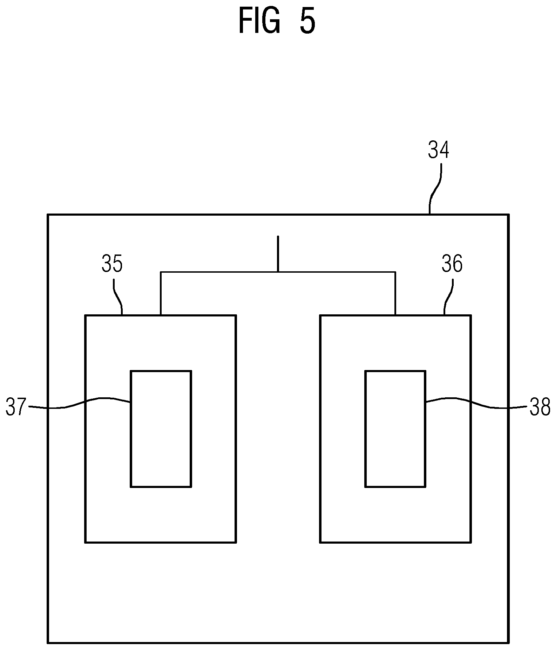

Die FIG 5 zeigt ein schematisches Struktogramm eines Verfahrens 34 für die erfindungsgemäße Filtervorrichtung visualisiert.

Das Verfahren 34 zeigt den Betrieb der Filtervorrichtung, wonach die Filtervorrichtung für den ersten Betrieb 35 des Umrichters für das als Wechselspannungsnetz ausgebildete Netz mit geerdetem Außenleiter oder für das als Wechselspannungsnetz ausgebildete erdungsfreie Netz einstellt ist oder die Filtervorrichtung für den zweiten Betrieb 36 des Umrichters für das als Wechselspannungsnetz ausgebildete Netz mit geerdetem Netzsternpunkt einstellt ist.

Der Anwender der Filtervorrichtung am Umrichter soll sich für eine der beiden Betriebsarten des Umrichters, erster Betrieb 35 oder zweiter Betrieb 36, entscheiden.

Im ersten Betrieb 35 des Umrichters wird das Mittel zur Sättigungsminderung 37 der Drosseleinheit aktiviert und die Kondensatoreinheit von dem geerdeten Schutzleiter getrennt, wobei die Stromableitung 38 deaktiviert ist.

Im zweiten Betrieb 36 des Umrichters ist die Kondensatoreinheit mit dem geerdeten Schutzleiter verbunden, wobei die Stromableitung 38 aktiviert und das Mittel zur Sättigungsminderung 37 deaktiviert ist.

## Patentansprüche

1. Filtervorrichtung (1) zur Verwendung für Umrichter (30) an einem Wechselspannungsnetz (20), aufweisend,
- eine erste Kondensatoreinheit (2) mit einem ersten Kondensatorsternpunkt (3) und eine zweite Kondensatoreinheit (4) mit einem zweiten Kondensatorsternpunkt (5), wobei die Kondensatoreinheiten (2,4) jeweils mit einer ersten Wechselspannungsleitung (21) verbunden sind,
- eine Drosseleinheit (6), wobei die Drosseleinheit (6) zwischen der ersten und zweiten Kondensatoreinheit (2,4) in der ersten Wechselspannungsleitung (21) verschaltet ist, und
- Mittel zur Sättigungsminderung (37) der Drosseleinheit (6).

2. Filtervorrichtung (1) nach Anspruch 1, hergerichtet für einen ersten Betrieb (35) des Umrichters (30) an einem als Wechselspannungsnetz (20) ausgebildeten Netz mit geerdetem Außenleiter (22) oder an einem als Wechselspannungsnetz (20) ausgebildeten erdungsfreien Netz, wobei das Mittel zur Sättigungsminderung (37) aktivierbar und die erste Kondensatoreinheit (2) von einem geerdeten Schutzleiter (7) trennbar ist.

3. Filtervorrichtung (1) nach Anspruch 2, hergerichtet für einen zweiten Betrieb (35) des Umrichters (30) an einem als Wechselspannungsnetz (20) ausgebildeten Netz mit geerdetem Netzsternpunkt, wobei die erste Kondensatoreinheit (2) mit dem geerdeten Schutzleiter (7) zur Stromableitung (38) eines Stroms (24) verbindbar und das Mittel zu Sättigungsminderung (37) deaktivierbar ist.

4. Filtervorrichtung (1) nach einem der vorhergehenden Ansprüche, wobei das Mittel zur Sättigungsminderung (37) die erste und zweite Kondensatoreinheit (2,4) und eine erste Kontakteinheit (9) umfasst und wobei die erste Kontakteinheit (9) zum Öffnen und Schließen einer ersten elektrischen Verbindung zwischen dem ersten Kondensatorsternpunkt (3) der ersten Kondensatoreinheit (2) und dem zweiten Kondensatorsternpunkt (5) der zweiten Kondensatoreinheit (4) zur Aktivierung und Deaktivierung der Sättigungsminderung (37) ausgebildet ist.

5. Filtervorrichtung (1) nach einem der Ansprüche 2 bis 4, wobei eine zweite Kontakteinheit (10) zum Öffnen und Schließen einer zweiten elektrischen Verbindung zwischen dem ersten Kondensatorsternpunkt (3) der zweiten Kondensatoreinheit (2) und dem geerdeten Schutzleiter (7) zur Aktivierung und Deaktivierung der Stromableitung (38) des Stroms (24) ausgebildet ist.

6. Filtervorrichtung (1) nach einem der vorhergehenden Ansprüche, wobei
- die erste Kondensatoreinheit (2) einen ersten, zweiten und dritten Kondensator (11,12,13) umfasst,
- der erste Kondensator (11) einerseits mit einer ersten Wechselspannungsphase (14) der ersten Wechselspannungsleitung (21), der zweite Kondensator (12) einerseits mit der zweiten Wechselspannungsphase (15) der ersten Wechselspannungsleitung (21) und der dritte Kondensator (13) einerseits mit der dritten Wechselspannungsphase (16) der ersten Wechselspannungsleitung (21) verbunden ist und
- der erste, zweite und dritte Kondensator (11,12,13) andererseits den ersten Kondensatorsternpunkt (3) ausbilden.

7. Filtervorrichtung (1) nach einem der vorhergehenden Ansprüche, wobei
- die zweite Kondensatoreinheit (4) einen vierten, fünften und sechsten Kondensator (17,18,19) umfasst,
- der vierte Kondensator (17) einerseits mit der ersten Wechselspannungsphase (14) der ersten Wechselspannungsleitung (21), der fünfte Kondensator (18) einerseits mit der zweiten Wechselspannungsphase (15) der ersten Wechselspannungsleitung (21) und der sechste Kondensator (19) einerseits mit der dritten Wechselspannungsphase (16) der ersten Wechselspannungsleitung (21) elektrisch verbunden ist und
- die Kondensatoren (17,18,19) andererseits den zweiten Kondensatorsternpunkt (5) ausbilden.

8. Filtervorrichtung (1) nach einem der Ansprüche 4 bis 7, wobei mindestens eine der elektrischen Kontakteinheiten (9,10) einen elektromechanischen Verbinder (25) oder einen Halbleiterschalter aufweist.

9. Filtervorrichtung (1) nach einem der Ansprüche 4 bis 8, wobei mindestens eine der elektrischen Kontakteinheiten (9,10) als ansteuerbarer Schalter (39) ausgebildet und mittels eines Ansteuersignals (26) einer Steuereinheit (27) ansteuerbar ist.

10. Filtervorrichtung (1) nach einem der Ansprüche 4 bis 9, wobei die elektrischen Kontakteinheiten (9,10) als ein elektrischer Wechsler (8) ausgebildet sind.

11. Filtervorrichtung (1) nach einem der Ansprüche 4 bis 10, wobei ein passives elektrisches Bauelement (28), insbesondere eine weitere Drossel (29), in der ersten elektrischen Verbindung zwischen dem ersten elektrischen Kondensatorsternpunkt (3) und dem zweiten elektrischen Kondensatorsternpunkt (5) elektrisch verschaltet ist.

12. Umrichter (30) mit einer Filtervorrichtung (1) nach einem der Ansprüche 1 bis 11 zum Betrieb einer elektrischen Maschine (31) an dem Wechselspannungsnetz (20).

13. Umrichter (30) nach Anspruch 12 mit einem Umrichtergehäuse (33), wobei die Filtervorrichtung (1) in ein Umrichtergehäuse (33) des Umrichters (32) integriert ist.

14. Verfahren (34) zum Betrieb einer Filtervorrichtung (1) nach einem der Ansprüche 1 bis 11, wobei die Filtervorrichtung (1) für den ersten Betrieb (35) des Umrichters (30) an dem als Wechselspannungsnetz (20) ausgebildeten Netz mit geerdetem Außenleiter (22) oder an dem als Wechselspannungsnetz (20) ausgebildeten erdungsfreien Netz eingestellt wird oder die Filtervorrichtung (1) für den zweiten Betrieb (36) des Umrichters (30) an dem als Wechselspannungsnetz (20) ausgebildeten Netz mit geerdetem Netzsternpunkt eingestellt wird.

15. Verfahren (34) nach Anspruch 14, wobei im ersten Betrieb (35) des Umrichters (30) das Mittel zur Sättigungsminderung (37) der Drosseleinheit (6) aktiviert und die erste Kondensatoreinheit (2) von dem geerdeten Schutzleiter (7) getrennt wird oder wobei im zweiten Betrieb (36) des Umrichters (30) die erste Kondensatoreinheit (2) mit dem geerdeten Schutzleiter (7) zur Stromableitung (38) verbunden und das Mittel zu Sättigungsminderung (37) deaktiviert wird.
